# EUROPÄISCHE PATENTSCHRIFT

(11) **EP 3 050 829 B1**
(45) Veröffentlichungstag und Bekanntmachung des Hinweises auf die Patenterteilung: **11.07.2018**
(21) Anmeldenummer: 16153481.3
(22) Anmeldetag: 29.01.2016
(51) Int. Cl.: B65G 17/20, B65G 21/10, B65G 9/00

(54) **HÖHENVERSTELLBARER KETTENFÖRDERER**
HEIGHT-ADJUSTABLE CHAIN CONVEYOR
CONVOYEUR A CHAINE REGLABLE EN HAUTEUR

(30) Priorität: 29.01.2015 DE 102015101322
(43) Veröffentlichungstag der Anmeldung: 03.08.2016
(73) Patentinhaber: Paseka, Tino, 76676 Graben-Neudorf (DE)
(72) Erfinder: Paseka, Tino, 76676 Graben-Neudorf (DE)
(74) Vertreter: Dr. Langfinger & Partner

(56) Entgegenhaltungen:
- EP-A1- 0 916 600
- EP-A1- 1 623 938
- KR-B1- 101 034 244
- US-A- 3 684 080
- US-A- 4 618 057
- US-A- 5 101 734

## Beschreibung

Die vorliegende Erfindung betrifft einen höhenverstellbaren Kettenförderer. Hierbei betrifft die Erfindung insbesondere die Führungsschiene der Transportkette eines Kettenförderers, wobei die Führungsschiene zumindest abschnittsweise während des Betriebs des Kettenförderers gemeinsam mit der Transportkette höhenverstellbar ist.

Kettenförderer als solche sind im Stand der Technik bekannt. Dabei dienen Kettenförderer der hier vorliegenden Art dem Transport von Werkstücken oder von in Transportwagen transportierbaren Werkstücken, auch als Power + Free Anlagen bezeichnet, beispielsweise für ein Lackieren derselben, einem innerbetrieblichen Transport oder für bestimmte Prozesse. In die umlaufende Transportkette solcher Kettenförderer wird an einer Aufnahmestation ein Werkstück eingehängt, oftmals unter Zuhilfenahme eines Befestigungselements zur Befestigung des Werkstücks oder des Transportwagens an der Kette, und das Werkstück bzw. der Transportwagen für das oder mit dem Werkstück wird bis zu einer Entnahmestation durch eine oder mehrere Bearbeitungseinrichtungen transportiert. Dabei ist es möglich, dass die Förderkette linear verläuft, aber auch abschnittsweise kurvenförmig, vertikale und horizontale Verläufe werden realisiert.

Nachteilig an den bekannten Kettenförderern ist dabei, dass die Bestückung der Transportkette mit den Werkstücken immer in einem vorbestimmtem Abstand vom Boden erfolgt. Die Bestückung der Kettenförderer selbst erfolgt im Fall des hängenden Transports der Werkstücke üblicherweise manuell, da die Werkstücke in die Befestigungselemente der Transportkette oder in die Transportkette selbst einzuhängen sind. Dies führt dazu, dass bei unterschiedlichen Körpergrößen der Benutzer oder bei langen Arbeitszeiten eine ungünstige Belastung der Muskulatur des Benutzers eintritt. Zudem ist keine variable Verstellung der Höhe innerhalb von Prozessen während des Betriebs des Kettenförderers möglich. Dies ist beispielsweise nachteilig, wenn in einem Lackbad Gegenständige unterschiedlicher Größe behandelt werden sollen.

Die für die weitere Bearbeitung der Werkstücke vorgesehenen Durchlaufmaschinen werden für ständig höhere Fördergeschwindigkeiten ausgelegt, so dass eine Unterbrechung des Umlaufs der Werkstücke aus ökonomischen Gründen nicht umsetzbar ist. Zudem ist es nicht möglich, den Umlauf der Werkstücke zu belieben Zeitpunkten zu unterbrechen, beispielsweise wenn sich diese in einer Trockeneinrichtung befinden, da dies die Werkstücke beschädigen kann.
Die aus dem Stand der Technik bekannte Absenkung eines Teils einer Führungsschiene eines Kettenförderers sieht vor, dass in diesem Fall ein Element eines lasttragenden Profils mit einem Führungsschienenelement der Führungskette ausgehängt und die Kette weggeführt wird, während der Vortrieb des Kettenförderers bis zur Rückführung des besagten Teils der Führungsschiene in die Betriebsposition gestoppt werden muss bzw. im Absenkbereich ein separate Kette zum Einsatz kommt. Das Dokument EP1623938 A1 offenbart einen Kettenförderer nach dem Oberbegriff des Anspruchs 1.

Ein gattungsgemäßer Kettenförderer ist in EP 0916600 A1 beschrieben. Bei dem gattungsgemäßen Kettenförderer kommen Teilabschnitte zum Einsatz, die mittels Gelenken miteinander verbunden sind, um eine Höhenveränderung des Kettenförderers während dem Betrieb zu ermöglichen. Zum Längenausgleich kommt ein U-förmiger Abschnitt zum Einsatz.
Die Verwendung eines solchen U-förmigen Abschnitts einzig zur Bereitstellung eines Längenausgleichs benötigt viel Fläche und verhindert einen möglichst kompakten Aufbau des Kettenförderers.
Die Aufgabe der vorliegenden Erfindung liegt somit darin, die Nachteile des Stands der Technik zu überwinden, und insbesondere einen Kettenförderer bereitzustellen, der ein ergonomisches Bestücken mit Werkstücken und deren ergonomische Entnahme sowie eine variable Anpassung der Beabstandung des Kettenförderers während dem Durchlauf des Werkstückwagens bzw. der Kettte, also während des des Betriebs ermöglicht.

Die Aufgabe wird gelöst durch einen Kettenförderer nach Anspruch 1. Ein erfindungsgemäßes Überführen der Transportkette von einem ersten in mindestens einen zweiten Abstand während des Betriebs des Kettenförderers hat insbesondere den Vorteil, dass ein Bestücken oder Entnehmen von Werkstücken ergonomisch optimal erfolgen kann. Auch kann eine Höhenverstellung während des Betriebs des Kettenförderers in einem Fertigungsprozess dynamisch erfolgen. Erfolgt ein Bestücken oder eine Entnahme durch einen kleineren Benutzer, so kann zumindest der erste Abschnitt des Kettenförderers abgesenkt werden. Für einen größeren Benutzer kann der besagte Abschnitt wieder angehoben werden, so dass grundsätzlich eine ergonomische Position für Benutzer unterschiedlicher Größe ermöglicht wird.
Auch ist es möglich, während der Bestückung oder der Entnahme den ersten Abschnitt anzuheben oder abzusenken, so dass insbesondere der Rücken und die weitere Muskulatur des Benutzers durch einen anderen Bewegungsablauf entlastet wird.
Der erfindungsgemäße erste und der mindestens eine zweite Abstand ist dabei vom Boden eines Aufstellorts des Kettenförderers bis zur Transportketten zu verstehen.

Der erfindungsgemäße Kettenförderer ist für einen Transport von insbesondere schweren Werkstücken vorgesehen. Um einen solchen Transport zu ermöglichen, weisen die Führungsschienenelemente bevorzugt eine C-förmige Profilform auf, in deren Inneren die Rollen der Förderkette geführt sind. Dabei ist es entscheidend, dass die Förderkette selbst nicht in einem zu großen Winkel und nicht zu kleinem Radius abgewinkelt und in jedem Zustand sicher geführt ist.
Im Unterschied zu anderen aus dem Stand der Technik bekannten Führungsschienen ist es erfindungsgemäß erforderlich, dass Rollen der Förderkette zu jedem Zeitpunkt zumindest abschnittsweise auf einem Führungsschienenelement im höhenveränderlichen Bereich aufliegen, so dass die auf die Förderkette einwirkenden Last in das Profil der Führungsschiene eingetragen wird.

Dabei ist vorgesehen, dass n Teilsegmente, mit n = 2, 3, 4, 5, 6, 7, 8, 9, 10 oder mehr, umfasst sind, wobei mindestens ein, insbesondere jedes der Teilsegmente auf einer ersten Seite ein erstes Verbindungselement umfasst, ausgelegt und eingerichtet, um das Teilsegment mit einem weiteren Teilsegment drehbar und längsverschiebbar zu lagern, und auf der der ersten Seite gegenüberliegenden zweiten Seite eine zweites Verbindungselement umfasst, ausgelegt und eingerichtet, um eine feste oder ausschließlich rotierbare Verbindung mit einem weitere Teilsegment bereitzustellen.

Es hat sich gezeigt, dass durch einen Einsatz von n Teilsegmenten ein sicheres Führen der Förderketten bei höhenveränderlichen Kettenförderern möglich ist. Die Anzahl der Teilsegmente bestimmt sich durch deren Maße sowie der absoluten Höhenveränderung.

Als besonders vorteilhaft hat sich erwiesen, wenn ein Teilsegment mit auf beiden Seiten neben diesem angeordneten Teilsegmenten, oder mit neben diesem angeordneten weiteren Abschnitten der Führungsschiene, mit unterschiedlichen ersten und zweiten Verbindungselementen verbunden wird. Somit wird ermöglicht, dass jedes Teilsegment auf einer Seite rotierend und auf der gegenüberliegenden Seite rotierend und längsverschiebbar lagernd ausgebildet ist, um eine Längenänderung des besagten Führungsschienenelements während einer Höhenänderung auszubilden. Die unterschiedliche Ausgestaltung der Verbindungselemente hat dabei insbesondere den Vorteil, dass ein der Abstand zwischen den Teilsegmenten gleichförmig bei der Längenänderung vergrößert oder verkleinert wird.

Dies kann beispielsweise in einem Fall dadurch realisiert werden, dass ein erstes Verbindungselement in eine kreisförmige Aussparung auf einer Seite des Teilsegments eingreift und ein zweites Verbindungselement auf der gegenüberliegende Seite des Teilsegments in ein Langloch.

Jedes Teilsegment ermöglicht somit zu beiden Seiten ein Rotation gegenüber den weiteren Teilsegmenten, während eine Längsverschiebung immer nur auf einer, insbesondere bei allen Teilsegmenten identischen, Seite zusätzlich zu der Rotation ermöglicht wird.

Auch kann vorgesehen sein, dass n Teilsegmente, mit n = 2, 3, 4, 5, 6, 7, 8, 9, 10 oder mehr, umfasst sind, wobei mindestens ein, insbesondere jedes der Teilsegmente eine Stützrolle bzw. Umlenkrolle umfasst, die insbesondere zu den Laufrädern der Förderkette korrespondiere Aussparungen aufweist, und wobei die Teilsegmente in ihrem Abstand vom Bodenbereich und/oder in ihrem Abstand zwischeneinender unabhängig voneinander veränderbar beanstandet sind.

Dabei kann vorgesehen sein, dass die ersten und zweiten Verbindungselemente eine Länge aufweisen, so dass der Abstand zweier Teilsegmenten im maximal beanstandeten Zustand der selben geringer ist als der Durchmesser der Laufräder der Transportkette und/oder mindestens eines, insbesondere jedes der Teilsegmente mindestens ein Beanstandungselement umfasst, so dass der maximal beabstandeten Zustand zweier Teilsegmente kleiner ist als der Durchmesser der Laufräder der Transportkette.

Um zu verhindern, dass ein Laufrad der Transportkette nicht mehr auf einem der Teilsegmente aufliegt, hat sich die erfindungsgemäße Anordnung von erstem und zweitem Verbindungselement als besonders vorteilhaft erwiesen. Es wird dabei verhindert, dass durch zwei gegenüberliegende längsverschiebliche Verbindungselemente zweier Teilsegment unterschiedliche Beabstandungen der n-Teilsegmente bei einer Längenänderung der Summe der n-Teilsegmente erfolgen kann, beispielsweise in dem zwischen einem ersten Teilsegment und einem zweiten Teilsegment ein sehr geringer Abstand erzeugt wird und zwischen dem zweiten und einem dritten Teilsegment ein sehr großer.

Ein Führungschienenelement weist üblicherweise eine längliche Form auf, d.h., dass das Führungsschienenelement eine größere Länge aufweist als die Breite oder die Tiefe desselben. Dabei weist ein Führungsschienenelement eine Vorderseite, eine Rückseite, eine Oberseite und eine Unterseite auf, die durch erste und zweite, sich gegenüberliegende, längsseitige Enden begrenzt sind. Dabei bilden die längsseitigen Enden insbesondere Stirnflächen der Führungsschienenelemente.

Dabei ist es für den Fachmann offensichtlich das mehrere erfindungsgemäße Führungsschienenelemente und konventionelle Führungsschienenelemente miteinander kombiniert werden können, um unterschiedliche Geometrien der abgesenkten Bereiche, beispielsweise V-förmige, Z-förminge oder U-förmige Bereiche oder beliebige andere Bereiche, zu realisieren.

Auch kann es gemäß einer Ausführungsform der Erfindung vorgesehen sein, dass mindestens eines der Führungsschienenelemente in seiner Länge veränderbar ausgebildet ist in dem ein oder mehrere Bereiche des mindestens einen ersten Führungsschienenelements im wesentlichen koaxial in einander geführt sind, der oder die nacheinander wahlweise ein- und ausfahrbar sind.

Durch eine solche Ausgestaltung mindestens eines Führungsschienenelements wird eine Anpassung der Länge des ersten Führungsschienenelements ermöglicht und somit kann beispielsweise ein Längenausgleich der Förderkette im Falle eines Absenkens eines Abschnitts eines Kettenförderers realisiert werden.

Gemäß einer Ausführungsform kann bevorzugt sein, dass mindestens ein Führungsschienenelement mittels mindestens einem lasttragenden Profil verbindbar oder verbunden ist, insbesondere sämtliche Führungsschienenelemente mit jeweils einem lastragenden Profil verbindbar oder verbunden sind, wobei die lasttragenden Profile mit einem weiteren Objekt zur Befestigung der lasttragenden Profile verbindbar oder verbunden sind, wobei insbesondere das oder die lasttragenden Profile, die mit den ersten Führungsschienenelemente verbindbar oder verbunden sind, nicht mit einem Objekt zur Befestigung der lasttragenden Profile verbunden sind.
Die Verwendung von lasttragenden Profilen hat sich als vorteilhaft erwiesen, um eine Halterung der Führungsschienenelemente für einen Transport von Werkstücken bereitzustellen. Dabei kann insbesondere vorgesehen sein, dass die lasttragenden Profile identisch oder nahezu identisch parallel zu den Führungsschienenelementen segmentiert vorliegen, wobei mindestens eines der lasttragenden Profile in seiner Länge veränderbar ausgebildet ist in dem ein oder mehrere Bereiche des mindestens einen ersten lasttragenden Profils im wesentlichen koaxial in einander geführt sind, der oder die nacheinander wahlweise ein- und ausfahrbar sind. Somit kann erfindungsgemäß in einer Ausführungsform eine Längenanpassung der lasttragenden Profile entsprechend der Längenänderung der Führungssschienenelemente erfolgen.
Es ist dabei für einen Fachmann offensichtlich, dass es ebenso für die segmentiert vorliegenden lasttragenden Profile vorteilhaft ist, wenn diese mittels Verbindungselementen nach Bedarf drehbar zueinander gelagert verbunden werden, um die Bewegung der Führungsschienenelemente nachzuvollziehen.

Auch ist erfindungsgemäß vorgesehen, dass die Führungsschiene im ersten Abschnitt, insbesondere mittels eines lasttragenden Profils, mit einer Hubeinrichtung verbunden ist, wobei die Hubeinrichtung ausgelegt und eingerichtet ist, um die Führungsschiene von dem ersten in den mindestens einen zweiten besagten Abstand und umgekehrt zu bewegen.
Eine solche Hubeinrichtung hat den Vorteil, dass der Kettenförderer in dem ersten Abschnitt höhenveränderlich gelagert ist, wobei der Kettenförderer jederzeit stabil gelagert wird.
Dabei kann vorgesehen sein, dass die Hubeinrichtung ein Scherengestänge, dessen Scherenholme durch mindestens einen, insbesondere zentralen, Gelenkbolzen verschwenkbar miteinander verbunden sind, ein Befestigungselement zur Befestigung des Scherengestänges mit der Führungsschiene und einen Spreizmechanismus, insbesondere umfassend einen Spreizhebel, der ausgelegt und eingerichtet ist, um die teilweise oder vollständig eingefahren Scherenholme aus einer ersten Position in eine zweite Position anhebt, umfasst.

Eine solche Ausgestaltung der Hubeinrichtung hat sich als besonders vorteilhaft erwiesen, um eine Höheneinstellung der Förderkette vorzunehmen. Bevorzugt ist dabei der Spreizmechanismus mit einer Antriebseinrichtung gekoppelt, die vom Benutzer mittels einer Bedieneinrichtung bedienbar ist. Die Bedieneinrichtung kann dabei beispielsweise ein erstes Schaltelement für eine Verschiebung nach oben und ein zweites Schaltelement für eine Verschiebung nach unten umfassen.

Des weitern hat es sich gemäß einer Ausführungsform der vorliegenden Erfindung als vorteilhaft erwiesen, dass eine Längenausgleichsvorrichtung zur Änderung der Länge des Förderwegs in Abhängigkeit des Abstands des ersten Abschnitts der Förderkette vom Bodenbereich umfasst ist, so dass die Förderkette eine ausreichende Spannung unabhängig von der Beabstandung des ersten Abschnitts vom Bodenbereich aufweist.

Dabei kann insbesondere vorgesehen sein, dass die Längenausgleichsvorrichtung eine Umlenkrolle umfasst, um die die Förderkette geführt ist, wobei die Umlenkrolle, insbesondere horizontal, verschiebbar angeordnet ist, und eine Verschiebung der Umlenkrolle in einer Änderung des Förderwegs des Kettenförderers resultiert, die insbesondere invers zu der Änderung des Förderwegs durch eine Veränderung des Abstands der ersten Abschnitts der Förderkette von dem Bodenbereich ist.

Somit wird sichergestellt, dass bei einer Höhenänderung die Förderkette weder überdehnt vorliegt noch ein Zustand eintritt, in dem keine ausreichende Spannung der Förderkette anliegt.

Schließlich kann vorgesehen sein, dass der erfindungsgemäße Kettenförderer in Wirkverbindung mit einer Beschichtungseinrichtung, einer Wascheinrichtung, einem innerbetrieblichen Transport, einem Gerbprozess, einem Reinigungsprozess im Textitlbereich und/oder eine Trockeneinrichtung steht oder bringbar ist.

Solche Einrichtungen werden einzeln oder in Kombination für eine Bearbeitung von Werkstücken eingesetzt, beispielsweise eine Beschichtungseinrichtung für eine Lackierung, eine Trockeneinrichtung zum Trocknen der Lackierung, eine Wascheinrichtung zum Säubern von Werkstücken vor einer weiteren Bearbeitung oder eine Trockeneinrichtung umfassend insbesondere eine Heizeinrichtung zum Trocknen der Werkstücke.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Dabei zeigt:
Fig. 1: eine schematische Ansicht eines Ausschnitts eines erfindungsgemäßen Kettenförderers;
Fig. 2: eine schematische Ansicht eines Ausschnitts eines erfindungsgemäßen Kettenförderers mit angehobenem ersten Abschnitt; und
Fig. 3a bis 3c: eine schematische Seitenansicht von Führungsschienenelemten mit erfindungsgemäßen Teilsegmenten in unterschiedlichen Beanstandungen vom Boden.

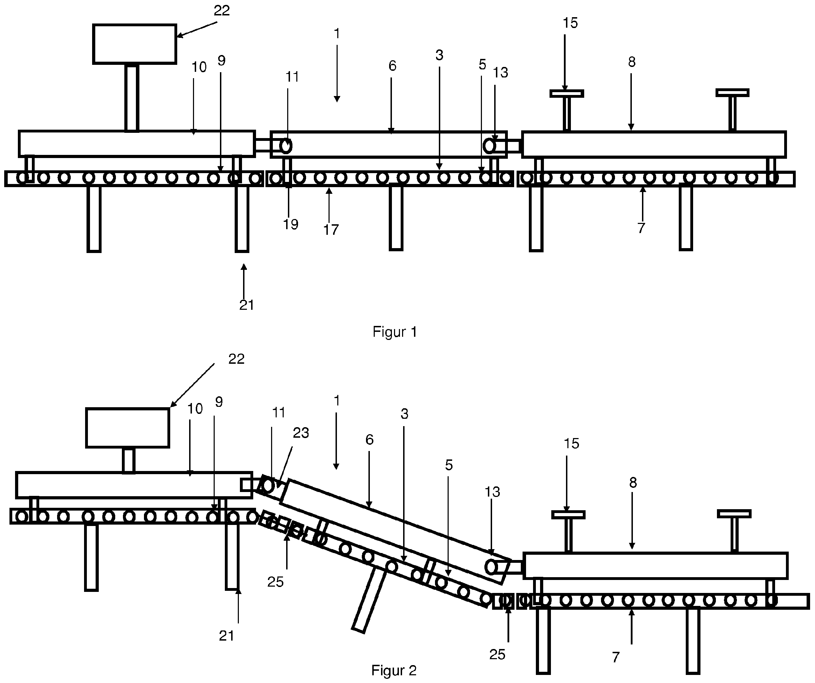

Figur 1 zeigt eine schematische Ansicht eines Ausschnitts eines erfindungsgemäßen Kettenförderers 1 zum Bearbeiten von Werkstücken mit einer in einem ersten Abstand vom Bodenbereich beabstandeten Führungsschiene 3, umfassend ein erstes Führungsschienenelement 5, ein lasttragendes Profil 6 zum tragen der Führungsschienenelemente, ein zweites Führungsschienenelement 7, welches mit einem zweiten lasttragenden Profil 8 verbunden ist und ein drittes Führungsschienenelement 9, das wiederum mit einem dritten lasttragenden Profil 10 verbunden ist.

Dabei umfasst das zweite lasttragenden Profil 6 zwei Drehlager 11, 13. Das zweite lasttragende Profil 8 ist mittels Halterungen 15 hängend gelagert, beispielsweise an der Decke eines Gebäudes befestigt. Eine endlos umlaufenden Transportkette 17, deren Kettenglieder Laufrollen aufweisen, ist mit einer nicht gezeigten Antriebseinrichtung verbunden. Die Führungsschienenelemente 5,7,9 sind in regelmäßigen Abständen mit Befestigungseinrichtungen 21 zum hängenden Transport der Werkstücke ausgestattet. Es ist offensichtlich, dass die Befestigungseinrichtung 21 in beliebigen Abstand zueinander anordnenbar sind und keinesfalls eine gleichförmige Beabstandung derselben erfolgen muss. Es sind dem Fachmann auch alternative Befestigungseinrichtungen (nicht gezeigt) bekannt, bei denen eine Transportwagen zwischen der Befestigungseinrichtung und der Förderkette zwischengeschaltet angeordnet ist, die sogenannte Power + Free Fördertechnik.

Die Führungsschiene 3 umfasst in dem gezeigten Ausschnitt die besagten drei Führungsschienenelemente 5,7,9, wobei das erstes Führungschienenelement 5 ein erstes längsseitiges Ende aufweist, welches benachbart zu einem erstem längsseitigem Ende des zweiten Führungsschienenelements 7 angeordnet ist. Ebenso ist ein zweites längsseitiges Ende des ersten Führungsschienenelements 5 benachbart zu dem ersten längsseitigen Ende des dritten Führungsschienenelements 9 angeordnet.

Das dritte lasttragende Profil 10 steht mit einer Hubeinrichtung 22 in Wirkverbindung, wobei die Hubeinrichtung 22 ausgelegt und eingerichtet ist, um das dritte lasttragende Profil 10 und das erste sowie abschnittsweise das zweite Führungsschienenelement 5, 9 der Führungsschiene 3 von dem ersten in den mindestens einen zweiten besagten Abstand und umgekehrt zu bewegen.

Figur 2 zeigt den Ausschnitt des erfindungsgemäßen Kettenförderers 1 aus Figur 1 in einer ausgelenkten Position von erstem und drittem Führungschienenelement 5, 9. Dabei ist ersichtlich, dass eine Höhenverstellung eines Abschnitts des Kettenförderers 1 während des Betriebs problemlos möglich ist. Um größere Höhenveränderungen zu ermöglichen, ist das erste Führungsschienenelement 5 sowie das erste lasttragenden Profil 6 in seiner Länge veränderbar ausgebildet ist. Hier sind grundsätzlich eine Vielzahl von Ausgestaltungen einer solchen Längenveränderung denbkar. Beispielhaft wird das lasttragende Profil 6 längenveränderlich ausgebildet, in dem ein oder mehrere Bereiche 23 des ersten lasttragenden Profils 6 im wesentlichen koaxial in einander geführt sind, der oder die nacheinander wahlweise ein- und ausfahrbar sind.

Dabei ist die Anordnung des ausfahrbaren Bereichs 23 offensichtlich nur beispielhaft zu verstehen, dieser kann ebenso gleichsam oder alternativ benachbart zu dem zweiten lasttragenden Profil 8 angeordnet sein.

Das erste Führungsschienenelemente 5 umfasst eine Vielzahl von Teilsegmenten 25, die gegeneinander verschiebbar gelagert sind. Dies kann beispielsweise durch Verbindungselemente realisiert sein, welche jeweils mit einem Teilsegment 25 nicht in Längsrichtung des jeweiligen Teilsegments beweglich, jedoch ggf. drehbar, mit diesem verbunden sind, und in dem nächsten Teilsegment 25 sowohl drehbar als auch in Längsrichtung beweglich verbunden sind. Eine beispielhafte Ausführung kann realisiert sein, dass in dem nächsten Teilsegment Langlöcher oder dergleichen ausgebildet sind.

Der Abstand zwischen den Teilsegmenten sollte dabei im beanstandeten Zustand der selben geringer sein als der Durchmesser der Laufräder der Transportkette.

Es ist offensichtlich, dass beide gezeigten Darstellungen einer längenveränderbaren Führungsschiene 3 sowie des lasttragenden Profils 6 auch umgekehrt oder jeweils ausschließlich zum Einsatz kommen können, wobei auch alternative Ausgestaltungen möglich sind. Auch können diese von einer Vielzahl von lasstragenden Profilen und/oder Führungsschienenelementen je nach Anwendungsfall umfasst sein, um eine gewünschte Führung und Abstützung und somit Lastabtragung in die Führungsschiene der Förderkette jederzeit bereitstellen zu können.

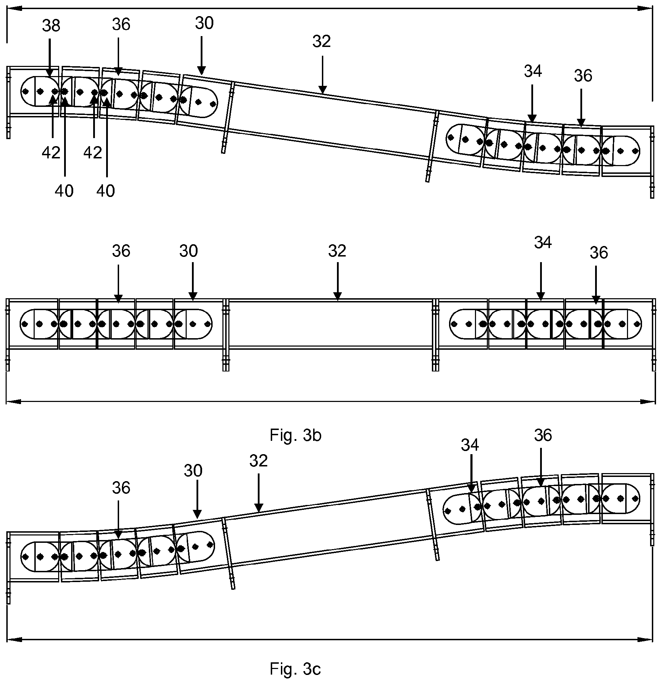

In den Figur 3a bis 3c ist eine schematische Seitenansicht von Führungsschienenelementen mit erfindungsgemäßen Teilsegmenten in 3 verschiedenen Positionen gezeigt.

Ein erstes Führungsschienelement 30 und ein drittes Führungschienenelement 34 weisen dabei erfindungsgemäße Teilsegmente 36 auf. Die erfindungsgemäßen Teilsegmente 36 sein dabei mittels plattenförmigen Verbindungselementen 38 miteinander verbunden. Dabei ist gezeigt, dass die Teilsegmenten 36 auf einer Seite, in den Figuren 3a bis 3b beispielsweise linksseitig angeordnet, eine drehbar und längsverschiebliche Lagerung 40 der plattenförmigen Verbindungselemente 38 aufweisen und auf der gegenüberliegenden, im den Figuren 3a bis 3c rechten Seite, ausschließlich ein drehbare Lagerung 42 umfassen. Dies führt dazu, dass Längenänderungen der erfindungsgemäßen Führungsschienenelemente immer gerichtet und gleichförmigen zwischen den Teilsegmenten 36 erfolgen.

In dem vorliegend gezeigtem Ausführungsbeispiel weisen die Teilsegmente 36 auf ihrer Vorderseite eine ovale Platte 44 auf, die fest mit den Teilsegmenten 36 verbunden ist und auf denen die Verbindungselemente 38 aufliegen. Ebenfalls kann vorgesehen sein, dass eine solche ovale Platte auch auf der nicht gezeigten Rückseite angeordnet ist. Die Form der ovalen Teilsegmente ermöglicht dabei ein gegenseitiges Abrollen der Teilsegmente bei eine relativen Bewegung zueinander.

Wie in den Figuren 3a bis 3c gezeigt, ermöglichen die erfindungsgemäßen Teilsegmente 36 ein Höhenänderung und eine Längenänderung der Führungsschienenelemente 30, 32, wobei die Führungsschiene selbst zu jedem Zeitpunkt eine optimale Kettenführung einer Förderkette ermöglicht und insbesondere die Laufräder der Förderkette immer mit den Teilsegmenten 36 in Wirkverbindung stehen.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Kettenförderer (1) zum Transport von Werkstücken an oder zu mindestens einer Maschine zum Bearbeiten dieser Werkstücke, wobei der Kettenförderer eine in einem ersten Abstand vom Bodenbereich beabstandet endlos umlaufende Transportkette (17) bzw. Zugkette, deren Kettenglieder Laufrollen aufweisen, mindestens eine Antriebseinrichtung, und eine Kettenführung, umfassend eine mindestens entlang eines Abschnitts des Umlaufwegs der Transportkette (17) angeordnete Führungsschiene (3), die mindestens zwei Führungsschienenelemente (5, 7, 9) umfasst, die mit den Laufrollen der Kettenglieder in Wirkverbindung steht, umfasst, und wobei mindestens eines der Kettenglieder mindestens eine Befestigungseinrichtung (21) und/oder Vorschubeinrichtung zum Transport mindestens eines Werkstücks oder Transportwagens umfasst, wobei die endlos umlaufende Transportkette (17) und die Führungsschiene (3) mindestens in einem ersten Abschnitt von dem ersten Abstand von dem Bodenbereich in mindestens einen zweiten Abstand von dem Bodenbereich überführbar ist, wobei die Laufrollen der Kettenglieder mit der Führungsschiene (3) im ersten und dem mindestens einen zweiten sowie dem Übergang von dem ersten in den mindestens einen zweiten besagten Abstand in Wirkverbindung stehen, so dass während des Betriebs des Kettenförderers (1) bei umlaufender Transportkette (17) oder Transportwagen eine, insbesondere abschnittsweise, Höhenverstellung des Kettenförderers (1) in dem ersten Abschnitt ermöglicht ist, und wobei mindestens eines der Führungsschienenelemente (5) in seiner Länge veränderbar ausgebildet ist und abschnittsweise drehbare und/oder in Längsrichtung zueinander verschiebbar verbundene Teilsegmente (25) umfasst, die eine relative Bewegung der Teilsegmente (25) zueinander eine Längenveränderung ermöglichen, wobei die Führungsschiene (3) im ersten Abschnitt mit einer Hubeinrichtung (22) verbunden ist, wobei die Hubeinrichtung (22) ausgelegt und eingerichtet ist, um die Führungsschiene (3) von dem ersten in den mindestens einen zweiten besagten Abstand und umgekehrt zu bewegen, wobei n Teilsegmente (25), mit n = 2, 3, 4, 5, 6, 7, 8, 9, 10 oder mehr, umfasst sind, wobei jedes der Teilsegmente (25) auf einer ersten Seite ein erstes Verbindungselement (38) umfasst, ausgelegt und eingerichtet, um das Teilsegment (25) mit einem weiteren Teilsegment (25) längsverschiebbar zu lagern, und auf der der ersten Seite gegenüberliegenden zweite Seite eine zweites Verbindungselement (38) umfasst, ausgelegt und eingerichtet, um eine feste oder ausschließlich rotierbare Verbindung mit einem weiteren Teilsegment (25) bereitzustellen, **dadurch gekennzeichnet, dass** das erste Verbindungselement (38) zusätzlich ausgelegt und eingerichtet ist das Teilsegment (25) mit dem entsprechenden weiteren Teilsegment (25) drehbar zu lagern.

2. Kettenförderer nach Anspruch 1, **dadurch gekennzeichnet, dass** mindestens ein, insbesondere jedes, der n Teilsegmente (25) eine Stützrolle bzw. Umlenkrolle umfasst, die insbesondere zu den Laufrädern der Förderkette (17) korrespondierende Aussparungen aufweist, und wobei die Teilsegmente (25) in ihrem Abstand vom Bodenbereich und/oder in ihrem Abstand zwischeneinender unabhängig voneinander veränderbar beanstandet sind.

3. Kettenförderer nach Anspruch 1 oder Anspruch 2, **dadurch gekennzeichnet, dass** die ersten und zweiten Verbindungselemente eine Länge aufweisen, so dass der Abstand zweier Teilsegmenten (25) im maximal beabstandeten Zustand der selben kleiner ist als der Durchmesser der Laufräder der Transportkette (17) und/oder mindestens eines, insbesondere jedes der Teilsegmente (25) mindestens ein Beabstandungselement umfasst, so dass der maximal beabstandeten Zustand zweier Teilsegmente (25) kleiner ist als der Durchmesser der Laufräder der Transportkette (17), damit jederzeit die Last in die Führungsschiene (3) eingeleitet ist.

4. Kettenförderer nach einem der vorangehenden Ansprüche, **dadurch gekennzeichnet, dass**
mindestens eines der Führungsschienenelemente (5, 7, 9) in seiner Länge veränderbar ausgebildet ist in dem ein oder mehrere Bereiche des mindestens einen ersten Führungsschienenelements (5) im wesentlichen koaxial in einander geführt sind, der oder die nacheinander wahlweise ein- und ausfahrbar sind.

5. Kettenförderer nach einem der vorangehenden Ansprüche, **dadurch gekennzeichnet, dass**
mindestens ein Führungsschienenelement (5, 7, 9) mittels mindestens einem lasttragenden Profil (6, 8, 10) verbunden ist, insbesondere sämtliche Führungsschienenelemente (5, 7, 9) mit jeweils einem lastragenden Profil (6, 8, 10) verbunden sind, wobei die lasttragenden Profile (6, 8, 10) mit einem weiteren Objekt zur hängenden Befestigung der lasttragenden Profile (6, 8, 10) verbunden sind, wobei insbesondere das oder die lasttragenden Profile (6, 8, 10), die mit den ersten Führungsschienenelemente (5, 7, 9) verbunden sind, nicht mit einem Objekt zur Befestigung der lasttragenden Profile (6, 8, 10) verbunden sind.

6. Kettenförderer nach einem der vorangehenden Ansprüche, **dadurch gekennzeichnet, dass**
die Führungsschiene (3) mittels eines lasttragenden Profils (6, 8, 10) im ersten Abschnitt mit der Hubeinrichtung (22) verbunden ist.

7. Kettenförderer nach einem der vorangehenden Ansprüche, **dadurch gekennzeichnet, dass**
die Hubeinrichtung (22) ein Scherengestänge, dessen Scherenholme durch mindestens einen, insbesondere zentralen, Gelenkbolzen verschwenkbar miteinander verbunden sind, ein Befestigungselement zur Befestigung des Scherengestänges mit der Führungsschiene (3) und einen Spreizmechanismus, insbesondere umfassend einen Spreizhebel, der ausgelegt und eingerichtet ist, um die teilweise oder vollständig eingefahren Scherenholme aus einer ersten Position in eine zweite Position anhebt, umfasst.

8. Kettenförderer nach einem der vorangehenden Ansprüche, durch gekennzeichnet, dass
eine Längenausgleichsvorrichtung zur Änderung der Länge des Förderwegs in Abhängigkeit des Abstands des ersten Abschnitts der Förderkette vom Bodenbereich umfasst ist, so dass die Förderkette (17) eine ausreichende Spannung unabhängig von der Beabstandung des ersten Abschnitts vom Bodenbereich aufweist.

9. Kettenförderer nach Anspruch 8, **dadurch gekennzeichnet, dass** die Längenausgleichsvorrichtung eine Umlenkrolle umfasst, um die die Förderkette (17) geführt ist, wobei die Umlenkrolle, insbesondere horizontal, verschiebbar angeordnet ist, und eine Verschiebung der Umlenkrolle in einer Änderung des Förderwegs des Kettenförderers (1) resultiert, die insbesondere invers zu der Änderung des Förderwegs durch eine Veränderung des Abstands der ersten Abschnitts der Förderkette (17) von dem
Bodenbereich ist.

10. Kettenförderer nach einem der vorangehenden Ansprüche, durch gekennzeichnet, dass
der Kettenförderer (1) in Wirkverbindung mit einer Beschichtungseinrichtung, einer Wascheinrichtung, einem innerbetrieblichen Transport, einem Gerbprozess, einem Reinigungsprozess im Textilbereich und/oder eine Trockeneinrichtung steht oder bringbar ist.

## Claims

1. Chain conveyor (1) for transporting workpieces on or to at least one machine for processing said workpieces, wherein the chain conveyor comprises a transport chain (17) or traction chain which revolves endlessly spaced at a first distance from the floor region and the chain links of which have running rollers, at least one drive device, and a chain guide, comprising a guide rail (3) which is arranged at least along a section of the revolving path of the transport chain (17) and comprises at least two guide rail elements (5, 7, 9) which is operatively connected to the running rollers of the chain links, and wherein at least one of the chain links comprises at least one fastening device (21) and/or advancing device for transporting at least one workpiece or transport cart, wherein the endlessly revolving transport chain (17) and the guide rail (3) is transferable at least in a first section from the first distance from the floor region into at least one second distance from the floor region, wherein the running rollers of the chain links are operatively connected to the guide rail (3) at the first distance and the at least one second distance and at the transition from the first into said at least one second distance such that, during the operation of the chain conveyor (1), with revolving transport chain (17) or transport cart, a height adjustment, in particular in sections, of the chain conveyor (1) is made possible in the first section, and wherein at least one of the guide rail elements (5) is designed to be changeable in its length and in sections comprises subsegments (25) which are rotatable and/or are connected displaceably in the longitudinal direction with respect to one another and which permit a relative movement of the subsegments (25) with respect to one another a change in length, wherein the guide rail (3) is connected in the first section to a lifting device (22), wherein the lifting device (22) is designed and configured in order to move the guide rail (3) from the first into said at least one second distance, and vice versa, wherein n subsegments (25) are included, where n = 2, 3, 4, 5, 6, 7, 8, 9, 10 or more, wherein each of the subsegments (25) comprises, on a first side, a first connecting element (38) designed and configured in order to mount the subsegment (25) in a longitudinally displaceable manner with a further subsegment (25), and, on the second side opposite the first side, comprises a second connecting element (38), designed and configured in order to provide a fixed or exclusively rotatable connection to a further subsegment (25), **characterized in that** the first connecting element (38) is additionally designed and configured to mount the subsegment (25) rotatably with the corresponding further subsegment (25).

2. Chain conveyor according to Claim 1, **characterized in that** at least one, in particular each, of the n subsegments (25) comprises a supporting roller or deflecting roller which has recesses in particular corresponding to the running wheels of the conveyor chain (17), and wherein the subsegments (25) are spaced apart so as to be changeable in their distance from the floor region and/or in their distance from one another in a manner independently of one another.

3. Chain conveyor according to Claim 1 or Claim 2, **characterized in that** the first and second connecting elements have a length such that the distance of two subsegments (25) at the maximally spaced-apart state of same is smaller than the diameter of the running wheels of the transport chain (17), and/or at least one, in particular each, of the subsegments (25) comprises at least one spacing element such that the maximally spaced-apart state of two subsegments (25) is smaller than the diameter of the running wheels of the transport chain (17) so that the load is always introduced into the guide rail (3).

4. Chain conveyor according to one of the preceding claims, **characterized in that** at least one of the guide rail elements (5, 7, 9) is designed to be changeable in its length by one or more regions of the at least one first guide rail element (5) being guided substantially coaxially into one another, said region or regions being either retractable or extendible successively.

5. Chain conveyor according to one of the preceding claims, **characterized in that** at least one guide rail element (5, 7, 9) is connected by means of at least one load-bearing profile (6, 8, 10), in particular all of the guide rail elements (5, 7, 9) are connected to one load-bearing profile (6, 8, 10) each, wherein the load-bearing profiles (6, 8, 10) are connected to a further object for the suspended fastening of the load-bearing profiles (6, 8, 10), wherein in particular the load-bearing profile or the load-bearing profiles (6, 8, 10) which are connected to the first guide rail elements (5, 7, 9) are not connected to an object for the fastening of the load-bearing profiles (6, 8, 10).

6. Chain conveyor according to one of the preceding claims, **characterized in that** the guide rail (3) is connected in the first section to the lifting device (22) by means of a load-bearing profile (6, 8, 10).

7. Chain conveyor according to one of the preceding claims, **characterized in that** the lifting device (22) comprises a scissors linkage, the scissor struts of which are connected pivotably to one another by means of at least one, in particular central, hinge pin, a fastening element for fastening the scissors linkage to the guide rail (3), and an expanding mechanism, in particular comprising an expanding lever, which is designed and configured to raises the partially or completely retracted scissor struts from a first position into a second position.

8. Chain conveyor according to one of the preceding claims, **characterized in that** a length-compensating device for changing the length of the conveying path depending on the distance of the first section of the conveying chain from the floor region is included, and therefore the conveying chain (17) is sufficiently tensioned irrespective of the spacing of the first section from the floor region.

9. Chain conveyor according to Claim 8, **characterized in that** the length-compensating device comprises a deflecting roller about which the conveying chain (17) is guided, wherein the deflecting roller is arranged displaceably, in particular horizontally, and a displacement of the deflecting roller results in a change in the conveying path of the chain conveyor (1), said change in particular being inverse to the change in the conveying path by a change in the distance of the first section of the conveying chain (17) from the floor region.

10. Chain conveyor according to one of the preceding claims, **characterized in that** the chain conveyor (1) is or can be brought into operative connection with a coating device, a washing device, on-site transport, a tanning process, a cleaning process in the textile sector and/or a drying device.

## Revendications

1. Convoyeur à chaîne (1) pour le transport de pièces sur ou vers au moins une machine pour l'usinage de ces pièces, dans lequel le convoyeur à chaîne comprend une chaîne de transport (17) ou une chaîne de traction tournant sans fin espacée d'une première distance du sol, dont les chaînons présentent des galets de roulement, au moins un dispositif d'entraînement, et un guide de chaîne, comprenant un rail de guidage (3) disposé au moins le long d'une partie du chemin de déplacement de la chaîne de transport (17), qui comprend au moins deux éléments de rail de guidage (5, 7, 9) qui est en liaison active avec les galets de roulement des chaînons, et dans lequel au moins un des chaînons comprend au moins un dispositif de fixation (21) et/ou un dispositif d'avance pour le transport d'au moins une pièce ou d'un chariot de transport, dans lequel la chaîne de transport (17) tournant sans fin et le rail de guidage (3) peut être transféré au moins dans une première partie de la première distance du sol à au moins une deuxième distance du sol, dans lequel les galets de roulement des chaînons sont en liaison active avec le rail de guidage (3) dans la première et dans ladite au moins une deuxième ainsi que dans la transition de la première à ladite au moins une deuxième distance, de telle manière que pendant le fonctionnement du convoyeur à chaîne (1), lorsque la chaîne de transport (17) ou le chariot de transport tourne, un réglage en hauteur du convoyeur à chaîne (1) soit, en particulier en partie, possible dans la première partie, et dans lequel au moins un des éléments de rail de guidage (5) peut être modifié en longueur et comprend localement des segments partiels (25) rotatifs et/ou déplaçables en direction longitudinale l'un par rapport à l'autre, qui permettent un mouvement relatif des segments partiels (25) l'un par rapport à l'autre une variation de longueur, dans lequel le rail de guidage (3) est relié dans la première partie à un dispositif de levage (22), dans lequel le dispositif de levage (22) est conçu et réalisé pour déplacer le rail de guidage (3) de la première à ladite au moins une deuxième distance ou inversement, dans lequel il est compris n segments partiels (25), avec n = 2, 3, 4, 5, 6, 7, 8, 9, 10 ou plus, dans lequel chacun des segments partiels (25) comprend sur un premier côté un premier élément d'assemblage (38), conçu et réalisé pour poser le segment partiel (25) de façon déplaçable en longueur avec un autre segment partiel (25), et comprend sur le deuxième côté opposé au premier côté un deuxième élément d'assemblage (38), conçu et réalisé pour procurer une liaison fixe ou exclusivement rotative avec l'autre segment partiel (25), **caractérisé en ce que** le premier élément d'assemblage (38) est en outre conçu et réalisé pour poser le segment partiel (25) de façon rotative avec l'autre segment partiel correspondant (25).

2. Convoyeur à chaîne selon la revendication 1, **caractérisé en ce qu'**au moins un, en particulier chacun, des n segments partiels (25) comprend un rouleau d'appui ou un rouleau de déviation, qui présente des découpes correspondant en particulier aux galets de roulement de la chaîne de transport (17), et dans lequel les segments partiels (25) sont espacés de façon variable indépendamment l'un de l'autre en ce qui concerne leur distance du sol et/ou leur distance entre eux.

3. Convoyeur à chaîne selon la revendication 1 ou la revendication 2, **caractérisé en ce que** les premiers et les deuxièmes éléments d'assemblage présentent une longueur, de telle manière que la distance de deux segments partiels (25) dans l'état le plus espacé de ceux-ci soit plus petite que le diamètre des galets de roulement de la chaîne de transport (17) et/ou au moins un, en particulier chacun des segments partiels (25) comprend au moins un élément d'écartement, de telle manière que l'état le plus espacé de deux segments partiels (25) soit plus petit que le diamètre des galets de roulement de la chaîne de transport (17), afin que la charge soit à tout instant introduite dans le rail de guidage (3).

4. Convoyeur à chaîne selon l'une quelconque des revendications précédentes, **caractérisé en ce qu'**au moins un des éléments de rail de guidage (5, 7, 9) peut être modifié en longueur par le fait qu'une ou plusieurs régions dudit au moins un élément de rail de guidage (5), qui peut/peuvent au choix être rentrée(s) et sortie(s) l'une après l'autre, sont guidées de façon essentiellement coaxiale l'une dans l'autre.

5. Convoyeur à chaîne selon l'une quelconque des revendications précédentes, **caractérisé en ce qu'**au moins un élément de rail de guidage (5, 7, 9) est assemblé au moyen d'au moins un profilé porteur de charge (6, 8, 10), en particulier tous les éléments de rail de guidage (5, 7, 9) sont assemblés chacun à un profilé porteur de charge (6, 8, 10), dans lequel les profilés porteurs de charge (6, 8, 10) sont assemblés à un autre objet pour la fixation suspendue des profilés porteurs de charge (6, 8, 10), dans lequel en particulier le ou les profilé(s) porteur (s) de charge (6, 8, 10), qui sont assemblés au premier élément de rail de guidage (5, 7, 9), ne sont pas assemblés à un objet pour la fixation des profilés porteurs de charge (6, 8, 10).

6. Convoyeur à chaîne selon l'une quelconque des revendications précédentes, **caractérisé en ce que** le rail de guidage (3) est assemblé au moyen d'un profilé porteur de charge (6, 8, 10) dans la première partie du dispositif de levage (22).

7. Convoyeur à chaîne selon l'une quelconque des revendications précédentes, **caractérisé en ce que** le dispositif de levage (22) comprend une tringlerie en ciseaux, dont les branches de ciseaux sont assemblées les unes aux autres de façon pivotante par au moins un pivot d'articulation, en particulier central, un élément de fixation pour la fixation de la tringlerie en ciseaux au rail de guidage (3) et un mécanisme d'expansion, comprenant en particulier un levier expansible, qui est conçu et réalisé pour soulève les branches de ciseaux partiellement ou entièrement rentrées d'une première position à une deuxième position.

8. Convoyeur à chaîne selon l'une quelconque des revendications précédentes, **caractérisé en ce qu'**il comprend un dispositif de compensation de longueur pour la variation de la longueur de la course de transport en fonction de la distance de la première partie de la chaîne de transport par rapport au sol, de telle manière que la chaîne de transport (17) présente une tension suffisante indépendamment de la distance de la première partie par rapport au sol.

9. Convoyeur à chaîne selon la revendication 8, **caractérisé en ce que** le dispositif de compensation de longueur comprend un rouleau de déviation, autour duquel la chaîne de transport (17) est conduite, dans lequel la chaîne de transport est disposée de façon déplaçable, en particulier horizontalement, et un déplacement du rouleau de déviation se traduit par une variation de la course de transport du convoyeur à chaîne (1), qui est en particulier inverse à la variation de la course de transport due à une variation de la distance de la première partie de la chaîne de transport (17) par rapport au sol.

10. Convoyeur à chaîne selon l'une quelconque des revendications précédentes, **caractérisé en ce que** le convoyeur à chaîne (1) est ou peut être mis en liaison active avec un dispositif de revêtement, un dispositif de lavage, un transport interne à une entreprise, un processus de tannage, un processus de nettoyage dans le domaine textile et/ou un dispositif de séchage.
